# FASCICULE DE BREVET EUROPEEN

(11) **EP 3 272 309 B1**
(45) Date de publication et mention de la délivrance du brevet: **29.01.2020**
(21) Numéro de dépôt: 17174005.3
(22) Date de dépôt: 01.06.2017
(51) Int. Cl.: A61C 13/07

(54) **PROTHÈSE DENTAIRE ADAPTÉE À UNE MÂCHOIRE ÉDENTÉE ET PROCÉDÉ D'ADAPTATION DE LA PROTHÈSE DENTAIRE À LA MÂCHOIRE ÉDENTÉE**
ZAHNPROTHESE, DIE AN EINEN ZAHNLOSEN KIEFER ANGEPASST IST, UND ANPASSUNGSVERFAHREN DER ZAHNPROTHESE AN DEN ZAHNLOSEN KIEFER
DENTAL PROSTHESIS ADAPTED TO AN EDENTULOUS JAW AND METHOD FOR ADAPTING THE DENTAL PROSTHESIS TO THE EDENTULOUS JAW

(30) Priorité: 18.07.2016 FR 1656821
(43) Date de publication de la demande: 24.01.2018
(73) Titulaire: TOUT DENTAIRE, 92500 Rueil Malmaison (FR)
(72) Inventeur: ATTALIN, Rémy, 92500 RUEIL MALMAISON (FR)
(74) Mandataire: Dejade & Biset

(56) Documents cités:
- JP-A- 402 307 443
- US-A- 4 251 215
- US-A- 5 304 063
- US-A- 5 431 563
- US-A- 5 709 548
- US-A1- 2004 248 065
- US-A1- 2011 300 508
- US-B1- 6 918 765

## Description

L'invention a trait au domaine des prothèses dentaires, et plus particulièrement à l'adaptation d'une prothèse dentaire à une mâchoire édentée.

Un individu édenté ne peut plus mâcher les aliments. Une des solutions, pour permettre à un individu édenté de mâcher correctement les aliments, est de lui proposer de porter une prothèse dentaire remplaçant les dents manquantes.

Les prothèses dentaires doivent être parfaitement adaptées à la forme de la gencive de la mâchoire édentée de l'individu, de sorte que la prothèse dentaire soit correctement fixée à la mâchoire édentée. Cependant, la mâchoire édentée se déformant naturellement avec le temps, la prothèse dentaire doit être régulièrement réadaptée à la forme de la mâchoire édentée. Une telle opération est communément appelée rebasage.

Le rebasage d'une prothèse dentaire est généralement réalisé par un professionnel, contraignant l'individu, dans l'attente de son rendez-vous, à continuer à porter une prothèse dentaire mal adaptée à sa mâchoire.

Il est connu, pour réaliser le rebasage d'une prothèse, d'utiliser un matériau apte à s'adapter à la forme de la mâchoire édentée de l'individu et à garder cette forme en se solidifiant avec le temps. Un tel matériau est, par exemple, vendu sous le nom de AGGRIP'DENT PRO ®. Néanmoins, un tel matériau ne permet pas, si une erreur est effectuée pendant l'opération de rebasage, de rectifier cette erreur.

Le document US 2004/0248065 décrit une prothèse dentaire apte à être adaptée à la mâchoire d'un individu édenté, sans l'intervention d'un professionnel. La prothèse dentaire comprend une base, de forme générale en U, configurée pour coopérer avec une gencive de l'individu. La base comprend des cavités dans lesquelles sont fixées des dents. La prothèse dentaire comprend également un matériau de garnissage, appliqué sur la base, du côté opposé aux dents et épousant la forme de la base. Afin d'adapter la prothèse dentaire à sa gencive, l'individu édenté plonge la prothèse dentaire dans de l'eau chaude. L'eau chaude permet de ramollir le matériau de garnissage. L'individu positionne ensuite la prothèse dans sa bouche, le matériau de garnissage plaqué contre sa gencive, puis serre la mâchoire ou appuie sur la prothèse dentaire avec les doigts jusqu'à refroidissement du matériau de garnissage. Le matériau de garnissage épouse ainsi parfaitement la forme de la gencive de l'individu et permet le maintien de la prothèse sur la gencive.

Une telle prothèse dentaire permet effectivement, à un individu non qualifié, d'adapter la prothèse à sa mâchoire sans faire appel à un professionnel. Cependant, une telle prothèse dentaire ne permet pas le rebasage d'une prothèse dentaire et le matériau de garnissage thermoformable ne permet pas, si une erreur est effectuée pendant l'opération de rebasage, de rectifier cette erreur.

Le document US5304063 décrit un procédé de fabrication d'une prothèse dentaire et d'adaptation de celle-ci à la bouche d'un patient édenté. Le procédé comprend des étapes consistant à mélanger un monomère, le méthacrylate de méthyle sous forme liquide, avec un polymère, le polyméthacrylate de méthyle sous forme de poudre, mouler le mélange obtenu pour réaliser une gencive édentée en chauffant puis en refroidissant le mélange, fixer des dents à la gencive édentée, la fixation des dents pouvant être réalisée avant ou après l'adaptation de la prothèse à la bouche du patient. Le procédé comprend ensuite une étape d'adaptation de la prothèse à la bouche du patient. Une résine non polymérisée est déposée sur la surface interne de la prothèse. La résine est durcie par polymérisation. La prothèse est réinsérée dans la bouche du patient, en maintenant une pression.

Un premier objectif est de proposer un procédé d'adaptation d'une prothèse dentaire à une mâchoire édentée.

Un deuxième objectif est de proposer un procédé d'adaptation d'une prothèse dentaire pouvant être mis en oeuvre sans intervention d'un professionnel, notamment un professionnel de santé.

Un troisième objectif est de proposer un procédé d'adaptation d'une prothèse dentaire dont l'adaptation peut être corrigée simplement et rapidement.

Un quatrième objectif est de proposer une prothèse dentaire adaptable à une mâchoire édentée selon un procédé répondant aux objectifs précédents.
A cet effet, il est proposé, en premier lieu, un procédé d'adaptation d'une prothèse dentaire à une première mâchoire pour combler un jeu entre la prothèse dentaire et la première mâchoire, la première mâchoire étant artificielle, selon la revendication 1.

Un tel procédé permet l'adaptation d'une prothèse dentaire à une première mâchoire.

Ce procédé permet également le rebasage d'une prothèse dentaire, par un individu non formé.

Diverses caractéristiques supplémentaires peuvent être prévues, seules ou en combinaison :
- le procédé comprend, avant l'étape de modification de la forme du matériau thermoformable, une étape de mise en forme d'une plaque thermoformable à partir du matériau thermoformable, la plaque thermoformable ayant une dimension très supérieure aux deux autres, de sorte que la plaque thermoformable soit apte à recouvrir la base de la zone de la prothèse dentaire ;
- le procédé comprend, après l'étape de modification de la forme du matériau thermoformable, une première étape de suppression des bavures du matériau sur la prothèse dentaire ;
- le procédé comprend, après l'étape de positionnement de la prothèse dentaire, une étape de mise en contact de la première mâchoire avec une deuxième mâchoire, complémentaire de la première mâchoire ;
- le procédé comprend, avant l'étape de mise en forme du matériau thermoformable, une étape de teinte du matériau thermoformable ;
- le procédé comprend une réitération de l'étape de modification de la forme du matériau thermoformable et de l'étape de positionnement de la prothèse dentaire, jusqu'à ce que le jeu entre la prothèse dentaire et la première mâchoire soit comblé.

Il est proposé, en second lieu, une prothèse dentaire comprenant une plaque thermoformable épousant la forme de la prothèse dentaire, le matériau thermoformable étant apte à combler un jeu présent entre la prothèse dentaire et une première mâchoire, cette prothèse dentaire étant obtenue selon un procédé tel que présenté ci-dessus.

Diverses caractéristiques supplémentaires peuvent être prévues, seules ou en combinaison :
- la zone de la prothèse dentaire définit toute la prothèse dentaire ;
- le matériau appartient à la famille des polycaprolactones.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue schématique en perspective d'une prothèse dentaire adaptée à une première mâchoire ;
- la figure 2 est une vue schématique en perspective de la première mâchoire ;
- la figure 3 est une vue schématique en perspective de la prothèse dentaire positionnée sur la première mâchoire ;
- la figure 4 est une vue schématique en perspective d'une étape de pose d'une plaque thermoformable sur la prothèse dentaire ;
- la figure 5 est une vue schématique en perspective d'une étape de modification de la forme de la plaque thermoformable, de sorte qu'elle épouse la forme de la prothèse dentaire ;
- la figure 6 est une vue schématique en perspective d'une étape de mise en contact de la première mâchoire avec une deuxième mâchoire, complémentaire de la première mâchoire ;
- la figure 7 est une représentation schématique illustrant des étapes relatives à un mode de réalisation d'un procédé de fabrication d'une prothèse dentaire amovible.

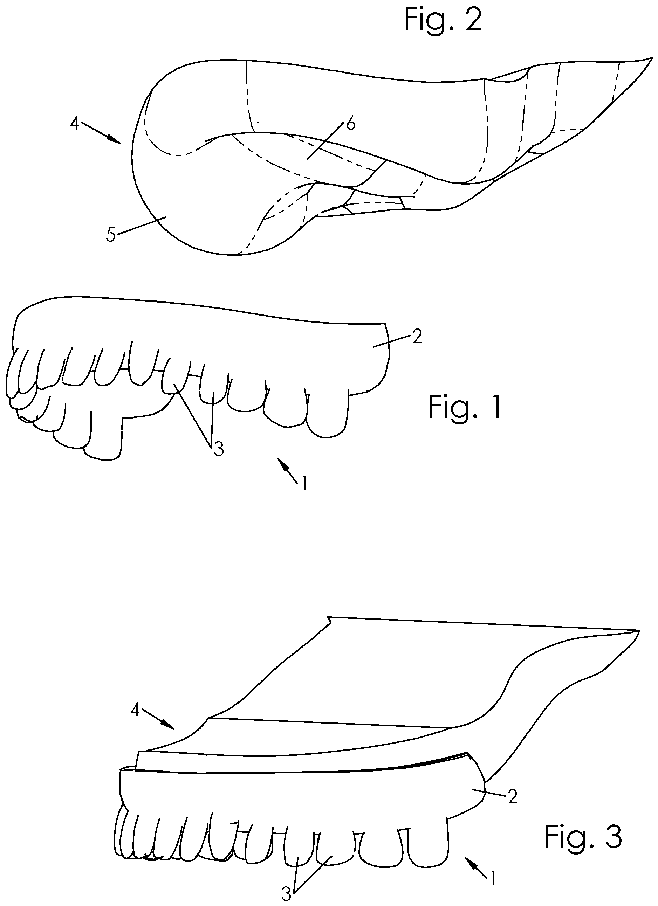

Sur la figure 1 est représenté une prothèse 1 dentaire comprenant une base **2** et des dents **3** fixées sur la base **2.**

Comme illustré sur la figure 3, selon un mode de réalisation préféré, la prothèse **1** dentaire est complète, c'est-à-dire qu'elle est apte à être fixée sur une première mâchoire **4** totalement édentée, représentée sur la figure 2.

Selon un des modes de réalisation non représentés, la prothèse **1** dentaire est partielle, c'est-à-dire qu'elle est apte à suppléer une ou plusieurs dents d'une première mâchoire **4** partiellement édentée.

La première mâchoire **4** est, ici, une mâchoire supérieure. Cependant, selon un mode de réalisation non illustré, la première mâchoire **4** est une mâchoire inférieure. La première mâchoire **4** peut être humaine, animale, artificielle ou un moulage d'une mâchoire édentée d'un individu.

La base **2** de la prothèse **1** dentaire présente une forme sensiblement identique à la forme d'une gencive **5** et d'un palais **6** de la première mâchoire **4.**

Selon le mode de réalisation où la première mâchoire **4** est la mâchoire inférieure, la base **2** présente une forme sensiblement identique à la forme d'une gencive de la mâchoire inférieure, de sorte à ne pas gêner les mouvements de la langue.

La prothèse **1** dentaire comprend également une plaque **7** thermoformable, épousant la forme de la base **2.** La plaque **7** thermoformable est solidaire de la base **2,** la base **2** étant disposée entre les dents **3** et la plaque **7** thermoformable.

Selon le mode de réalisation représenté, la plaque **7** thermoformable recouvre la totalité de la base **2** de la prothèse **1** dentaire.

Selon des modes de réalisation non représentés, la plaque **7** thermoformable recouvre une zone de la base **2** de la prothèse **1** dentaire. La prothèse **1** dentaire peut également comprendre plusieurs plaques **7** thermoformables, recouvrant chacune une zone de la base **2.**

La plaque **7** thermoformable épouse également la forme de la première mâchoire **4**, de sorte à combler un jeu présent entre la base **2** de la prothèse **1** dentaire et la première mâchoire **4.** La plaque **7** thermoformable est apte à être fixée sur la première mâchoire **4** fixant la prothèse **1** dentaire à la première mâchoire **4.**

La plaque **7** thermoformable est fabriquée en un matériau apte à conserver une forme définie.

Selon un mode de réalisation préféré, le matériau est thermoformable. Le matériau appartient avantageusement à la famille des polycaprolactones.

Selon le mode de réalisation de l'invention, le matériau est sous forme de plaques.

Selon un mode de réalisation préféré, la base **2** et les dents **3** de la prothèse **1** dentaire sont préfabriquées. La prothèse **1** dentaire est une ancienne prothèse de l'individu ne s'adaptant plus à la mâchoire édentée de l'individu et présentant donc une mauvaise fixation à la mâchoire édentée.

Selon des modes de réalisation différents, la prothèse **1** dentaire est un modèle standard adaptable, par le biais de la plaque **7** thermoformable, à une mâchoire édentée d'un individu ou un modèle mal adapté à la mâchoire édentée de l'individu.

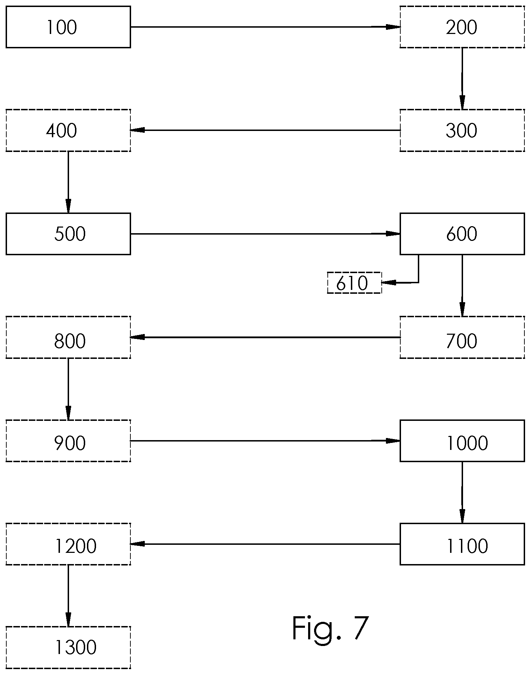

Un procédé d'adaptation d'une telle prothèse **1** dentaire à une première mâchoire **4**, dont les étapes sont décrites ci-dessous, est illustré sur les figures 3 à 6. Les étapes sont décrites et illustrées sur la figure 7 suivant leur ordre de réalisation, selon le mode de réalisation préféré.

Le procédé d'adaptation, décrit dans la suite de ce texte, permet l'adaptation de l'ancienne prothèse d'un individu, aussi appelée rebasage de la prothèse, mais également l'adaptation d'une prothèse **1** dentaire standard ou mal adaptée auparavant.

Selon le mode de réalisation préféré, le procédé comprend une première étape **100** de chauffage d'un matériau thermoformable. Le matériau, appartenant avantageusement à la famille des polycaprolactones, est chauffé, de sorte à ce qu'il devienne malléable. La température de chauffe est située entre soixante degrés Celsius et soixante-dix degrés Celsius. Le chauffage du matériau est, par exemple, réalisé à l'aide d'un sèche-cheveux.

Selon des modes de réalisations différents, le matériau est chauffé dans un four, ou encore par immersion dans de l'eau chaude.

Le procédé comprend une étape **200** de teinte du matériau thermoformable. Le matériau chaud est mélangé avec des colorants, de sorte à lui donner une couleur proche de la couleur de la gencive **5** et du palais **6** de la première mâchoire **4.** Les colorants utilisés sont avantageusement d'origine naturelle.

Selon des modes de réalisation différents, les colorants sont de type alimentaire. Le matériau peut également être non coloré, pour garder sa teinte d'origine.

Selon le mode de réalisation préféré, le procédé comprend une deuxième étape **300** de chauffage du matériau thermoformable. Le matériau, appartenant avantageusement à la famille des polycaprolactones, est chauffé, de sorte à ce qu'il devienne malléable. La température de chauffe est située entre soixante degrés Celsius et soixante-dix degrés Celsius. Le chauffage du matériau est, par exemple, réalisé à l'aide d'un sèche-cheveux.

Selon des modes de réalisations différents, le matériau est chauffé dans un four, ou encore par immersion dans de l'eau chaude.

Si le matériau thermoformable est suffisamment malléable après l'étape **200** de teinte ou si l'étape **200** de teinte n'est pas réalisée, la deuxième étape **300** de chauffage n'est pas nécessaire.

Le procédé comprend une étape **400** de mise en forme de la plaque **7** thermoformable, à partir du matériau thermoformable. Le matériau est aplati formant la plaque **7** thermoformable. La plaque **7** thermoformable présente une forme générale trapézoïdale, ayant une dimension très inférieure aux deux autres.

Selon un mode de réalisation non représenté, dans le cas où la première mâchoire **4** est une mâchoire inférieure, la plaque **7** thermoformable présente une forme générale en U, ayant une dimension très inférieure aux deux autres.

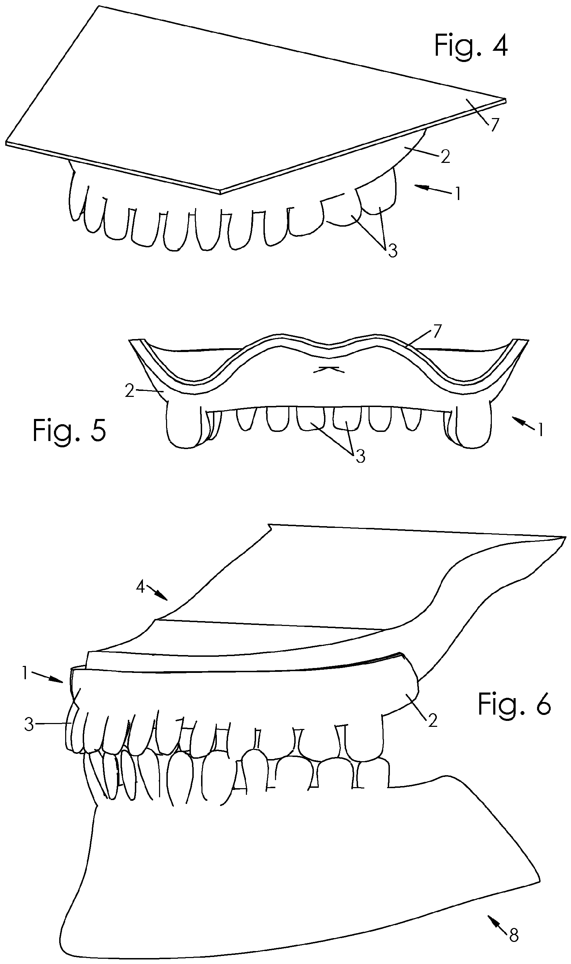

Comme illustré sur la figure 4, le procédé comprend une étape **500** de pose de la plaque **7** thermoformable sur la base **2** de la prothèse **1** dentaire. La plaque **7** thermoformable est disposée sur la base **2**, du côté opposé aux dents **3** de la prothèse **1** dentaire.

Selon le mode de réalisation représenté, les dimensions de la plaque **7** thermoformable sont supérieures aux dimensions de la base **2.**

Selon un mode de réalisation non représenté, la plaque **7** thermoformable est posée sur la zone de la base **2.** Les dimensions de la plaque **7** thermoformable sont supérieures aux dimensions de la zone de la base **2.**

Selon un mode de réalisation différent, l'étape **500** de pose est réalisée directement après la première étape **100** de chauffage ou la deuxième étape **300** de chauffage. Le matériau thermoformable est posé sur la base **2**, du côté opposé aux dents **3** de la prothèse **1** dentaire.

Comme illustré sur la figure 5, le procédé comprend une étape **600** de modification de la forme de la plaque **7** thermoformable.

Selon le mode de réalisation préféré, l'étape **600** de modification de la forme comprend une troisième phase **610** de chauffage de la plaque **7** thermoformable. La plaque **7,** fabriquée à partir du matériau appartenant avantageusement à la famille des polycaprolactones, est chauffée, de sorte à ce qu'elle mollisse et épouse les formes de la base **2** de la prothèse **1** dentaire. La température de chauffe est située entre soixante degrés Celsius et soixante-dix degrés Celsius. Le chauffage de la plaque **7** thermoformable est, par exemple, réalisé à l'aide d'un sèche-cheveux.

Selon des modes de réalisations différents, la plaque **7** thermoformable est chauffée dans un four.

Si la plaque **7** thermoformable est suffisamment malléable après l'étape **500** de pose, la troisième phase **610** de chauffage n'est pas nécessaire et l'étape **600** de modification de la forme consiste à plaquer la plaque **7** thermoformable contre la base **2** de la prothèse **1** dentaire.

Selon un mode de réalisation différent, l'étape **600** de modification de la forme est réalisée directement après la première étape **100** de chauffage ou la deuxième étape **300** de chauffage. Le matériau thermoformable est plaqué contre la base **2** de la prothèse **1** dentaire.

Le procédé comprend une première étape **700** de suppression des bavures de la plaque **7** thermoformable sur la base **2** de la prothèse **1** dentaire. Les bavures sont supprimées à l'aide d'un outil tranchant.

Selon le mode de réalisation préféré, le procédé comprend une première étape **800** de durcissement de la plaque **7** thermoformable.

Selon le mode de réalisation préféré, la prothèse **1** dentaire est plongée dans de l'eau à température ambiante, refroidissant la plaque **7** et provoquant son durcissement. Selon un mode de réalisation différent, la plaque **7** thermoformable est refroidie par l'air ambiant provoquant son durcissement.

Selon un mode de réalisation préféré, le procédé comprend une quatrième étape **900** de chauffage de la plaque **7** thermoformable. La plaque **7**, fabriquée à partir du matériau appartenant avantageusement à la famille des polycaprolactones, est chauffée, de sorte à ce qu'elle devienne malléable. La température de chauffe est située entre soixante degrés Celsius et soixante-dix degrés Celsius. Le chauffage du matériau est, par exemple, réalisé à l'aide d'un sèche-cheveux.

Selon des modes de réalisations différents, la plaque **7** thermoformable est chauffé dans un four, ou encore par immersion dans de l'eau chaude.

Si la plaque **7** thermoformable est suffisamment malléable après l'étape **600** de modification de la forme, la quatrième étape **900** de chauffage n'est pas nécessaire.

Comme illustré sur la figure 3, le procédé comprend une étape **1000** de positionnement de la prothèse **1** dentaire sur la première mâchoire **4.**

Selon le mode de réalisation représenté, la plaque **7** thermoformable de la prothèse **1** dentaire est positionnée contre la gencive **5** et le palais **6** de la première mâchoire **4.**

Selon un mode de réalisation non représenté, dans le cas où la première mâchoire **4** est une mâchoire inférieure, la plaque **7** thermoformable est positionnée contre la gencive de la première mâchoire.

Le procédé comprend une étape **1100** d'écrasement de la plaque **7** thermoformable, illustrée sur la figure 6. Une deuxième mâchoire **8**, complémentaire de la première mâchoire **4**, est serrée contre la première mâchoire **4**, sur laquelle est positionnée la prothèse **1** dentaire, de sorte que la prothèse **1** dentaire appuie contre la première mâchoire **4** et que la plaque **7** thermoformable se déforme en comblant le jeu présent entre la prothèse **1** dentaire et la première mâchoire **4.**

La deuxième mâchoire **8** est, ici, une mâchoire inférieure. Cependant, selon un mode de réalisation non illustré, la deuxième mâchoire **8** est une mâchoire supérieure. La deuxième mâchoire **8** peut être humaine, animale, artificielle ou un moulage d'une mâchoire édentée d'un individu.

Selon des modes de réalisation différents, l'étape **1100** d'écrasement de la prothèse **1** dentaire contre la première mâchoire **4** est réalisée par appui avec une main ou avec un dispositif permettant d'exercer une force sur la prothèse **1** dentaire.

Selon un mode de réalisation préféré, le procédé comprend une deuxième étape **1200** de suppression des bavures de la plaque **7** thermoformable sur la base **2** de la prothèse **1** dentaire. Les bavures sont supprimées à l'aide d'un outil tranchant.

Le procédé comprend une deuxième étape **1300** de durcissement de la plaque **7** thermoformable.

Selon le mode de réalisation préféré, la prothèse **1** dentaire est refroidie par l'air ambiant provoquant son durcissement. Selon un mode de réalisation différent, la prothèse **1** dentaire est plongée dans de l'eau à température ambiante, refroidissant le matériau et provoquant son durcissement.

Le procédé d'adaptation de la prothèse **1** dentaire peut être réitéré entièrement ou en partie.

Un tel procédé permet l'adaptation d'une prothèse **1** dentaire à une première mâchoire **4** édentée avec des matériaux biocompatibles.

Ce procédé de fabrication peut être réalisé facilement, par un individu non formé.

Ce procédé propose une correction simple et rapide de l'adaptation de la prothèse **1** dentaire.

## Revendications

1. Procédé d'adaptation d'une prothèse (**1**) dentaire à une première mâchoire (**4**) pour combler un jeu entre la prothèse (**1**) dentaire et la première mâchoire (**4**), la prothèse (1) dentaire comprenant une base (2) et des dents (3) fixées sur la base (2), et la première mâchoire (**4**) étant artificielle, ce procédé comprenant :
- une étape (**100**) de chauffage d'un matériau thermoformable ;
- une étape (**600**) de modification de la forme d'une plaque (**7**) de matériau thermoformable, de sorte qu'elle épouse la forme d'une zone de la base (2) de la prothèse (**1**) dentaire ;
- une étape (**1000**) de positionnement de la prothèse (**1**) dentaire sur la première mâchoire (**4**),
le procédé comprenant, avant l'étape (**600**) de modification de la forme de la plaque (7) de matériau thermoformable, une étape (**500**) de pose du matériau thermoformable sur la prothèse (**1**) dentaire, en regard de la zone de la zone de la base (2) de la prothèse (**1**) dentaire, le matériau thermoformable appartenant à la famille des polycaprolactones.

2. Procédé selon la revendication précédente, **caractérisé en ce qu**'il comprend, entre l'étape (**100**) de chauffage et l'étape (**600**) de modification de la forme de la plaque (**7**) de matériau thermoformable, une étape (**400**) de mise en forme de la plaque (**7**) thermoformable à partir du matériau thermoformable, le matériau thermoformable étant aplati de sorte que trois dimensions de la plaque (**7**) thermoformable sont telles qu'une des dimensions est supérieure aux deux autres dimensions, la plaque (**7**) thermoformable étant apte à recouvrir la zone de la base (2) de la prothèse (**1**) dentaire.

3. Procédé selon l'une quelconque des revendications précédentes, **caractéris**é **en ce qu**'il comprend, après l'étape (**600**) de modification de la forme de la plaque (**7**) de matériau thermoformable, une première étape (**700**) de suppression des bavures du matériau sur la prothèse (**1**) dentaire.

4. Procédé selon l'une quelconque des revendications précédentes, **caractérisé en ce qu**'il comprend, après l'étape (**1000**) de positionnement de la prothèse dentaire (1), une étape de mise en contact de la première mâchoire (**4**) avec une deuxième mâchoire (**8**), complémentaire de la première mâchoire (**4**).

5. Procédé selon l'une quelconque des revendications précédentes, **caractérisé en ce qu'**il comprend, avant l'étape (**400**) de mise en forme de la plaque (**7**) de matériau thermoformable, une étape (**200**) de teinte du matériau thermoformable.

6. Procédé selon l'une quelconque des revendications précédentes, **caractérisé en ce qu**'il comprend une réitération de l'étape (**600**) de modification de la forme de la plaque (**7**) de matériau thermoformable et de l'étape (**1000**) de positionnement de la prothèse (**1**) dentaire, jusqu'à ce que le jeu entre la prothèse (**1**) dentaire et la première mâchoire (**4**) soit comblé.

7. Prothèse (**1**) dentaire comprenant du matériau thermoformable épousant la forme de la prothèse (**1**) dentaire, le matériau thermoformable étant apte à combler un jeu présent entre la prothèse (**1**) dentaire et une première mâchoire (**4**), cette prothèse (**1**) dentaire étant obtenue selon un procédé selon l'une quelconque des revendications précédentes.

8. Prothèse (**1**) selon la revendication précédente, **caractérisée en ce que** la zone de la base de la prothèse (**1**) dentaire définit toute la base (2) de la prothèse (**1**) dentaire.

## Patentansprüche

1. Anwendungsverfahren einer Zahnprothese (1) an einem ersten Kiefer (4) zum Auffüllen eines Spiels zwischen der Zahnprothese (1) und dem ersten Kiefer (4), wobei die Zahnprothese (1) eine Basis (2) und auf der Basis (2) befestigte Zähne (3) umfasst und der erste Kiefer (4) künstlich ist, wobei dieses Verfahren umfasst:
- einen Erhitzungsschritt (100) eines warmformbaren Materials;
- einen Abänderungsschritt (600) der Form einer Platte (7) aus warmverformbarem Material derart, dass sie die Form eines Basisbereichs (2) der Zahnprothese (1) annimmt;
- einen Positionierungsschritt (1000) der Zahnprothese (1) auf dem ersten Kiefer (4),
wobei das Verfahren vor dem Abänderungsschritt (600) der Form der Platte (7) aus warmverformbaren Material einen Anbringungsschritt (500) des warmverformbaren Materials auf der Zahnprothese (1) gegenüber dem Bereich des Basisbereichs (2) der Zahnprothese (1) umfasst, wobei das warmverformbare Material zur Familie der Polycaprolactone gehört.

2. Verfahren gemäß dem voranstehenden Anspruch, **dadurch gekennzeichnet, dass** es zwischen dem Heizschritt (100) und dem Abänderungsschritt (600) der Form der Platte (7) aus warmverformbarem Material einen Schritt (400) zum Formen der warmverformbaren Platte (7) ausgehend von dem warmverformbaren Material umfasst, wobei das warmverformbare Material derart abgeflacht wird, dass drei Abmessungen der warmverformbaren Platte (7) derart sind, dass eine der Abmessungen größer ist als die zwei anderen Abmessungen, wobei die warmverformbare Platte (7) geeignet ist, um den Bereich der Basis (2) der Zahnprothese (1) abzudecken.

3. Verfahren gemäß einem der voranstehenden Ansprüche, **dadurch gekennzeichnet, dass** er nach dem Abänderungsschritt (600) der Form der Platte (7) aus warmverformbarem Material einen ersten Beseitigungsschritt (700) der Grate des Materials auf der Zahnprothese (1) umfasst.

4. Verfahren gemäß einem der voranstehenden Ansprüche, **dadurch gekennzeichnet, dass** es nach dem Positionierungsschritt (1000) der Zahnprothese (1) einen Kontaktierungsschritt des ersten Kiefers (4) mit einem zweiten, zum ersten Kiefer (4) komplementären Kiefer (8) umfasst.

5. Verfahren gemäß irgendeinem der voranstehenden Ansprüche, **dadurch gekennzeichnet, dass** es vor dem Schritt zum Formen (400) der Platte (7) aus warmformbarem Material einen Färbungsschritt (200) des warmformbaren Materials umfasst.

6. Verfahren gemäß irgendeinem der voranstehenden Ansprüche, **dadurch gekennzeichnet, dass** es eine Wiederholung des Abänderungsschritts (600) der Form der Platte (7) aus warmformbarem Material und des Positionierungsschritts (1000) der Zahnprothese (1) umfasst, bis das Spiel zwischen der Zahnprothese (1) und dem ersten Kiefer (4) aufgefüllt wird.

7. Zahnprothese (1), umfassend warmverformbares Material, das die Form der Zahnprothese (1) annimmt, wobei das warmverformbare Material geeignet ist, ein Spiel aufzufüllen, das zwischen der Zahnprothese (1) und einem ersten Kiefer (4) vorhanden ist, wobei diese Zahnprothese (1) gemäß einem Verfahren gemäß irgendeinem der voranstehenden Ansprüche erhalten wird.

8. Prothese (1) gemäß dem voranstehenden Anspruch, **dadurch gekennzeichnet, dass** der Bereich der Basis der Zahnprothese (1) die gesamte Basis (2) der Zahnprothese (1) definiert.

## Claims

1. A method for adapting a dental prosthesis (1) to a first jaw (4) to fill a gap between the dental prosthesis (1) and the first jaw (4), the dental prosthesis (1) comprising a base (2) and teeth (3) fixed on the base (2), and the first jaw (4) being artificial, this method comprising:
- a step (100) of heating a thermoformable material;
- a step (600) of modifying the shape of a thermoformable material plate (7), so that it fits the shape of an area of the base (2) of the dental prosthesis (1) closely;
- a step (1000) of positioning the dental prosthesis (1) on the first jaw (4),
the method comprising, before the step (600) of modifying the shape of the thermoformable material plate (7), a step (500) of laying the thermoformable material on the dental prosthesis (1), facing the area of the area of the base (2) of the dental prosthesis (1), the thermoformable material belonging to the family of polycaprolactones.

2. The method according to the previous claim, **characterised in that** it comprises, between the step (100) of heating and the step (600) of modifying the shape of the thermoformable material plate (7), a step (400) of shaping the thermoformable plate (7) from the thermoformable material, the thermoformable material being flattened so that three dimensions of the thermoformable plate (7) are such that one of its dimensions is larger than both other dimensions, the thermoformable plate (7) being able to overlay the area of the base (2) of the dental prosthesis (1).

3. The method according to any of the previous claims, **characterised in that** it comprises, after the step (600) of modifying the shape of the thermoformable material plate (7), a first step (700) of removing the burrs of the material from the dental prosthesis (1).

4. The method according to any of the previous claims, **characterised in that** it comprises, after the step (1000) of positioning the dental prosthesis (1), a step of contacting the first jaw (4) with a second jaw (8), complementary to the first jaw (4).

5. The method according to any of the previous claims, **characterised in that** it comprises, before the step (400) of shaping the thermoformable material plate (7), a step (200) of dyeing the thermoformable material.

6. The method according to any of the previous claims, **characterised in that** it comprises a repetition of the step (600) of modifying the shape of the thermoformable material plate (7) and of the step (1000) of positioning the dental prosthesis (1), until the gap between the dental prosthesis (1) and the first jaw (4) is filled.

7. A dental prosthesis (1) comprising thermoformable material fitting the shape of the dental prosthesis (1) closely, the thermoformable material being able to fill a gap present between the dental prosthesis (1) and a first jaw (4), this dental prosthesis (1) being obtained according to a method according to any of the previous claims.

8. The prosthesis (1) according to the previous claim, **characterised in that** the area of the base of the dental prosthesis (1) defines the whole base (2) of the dental prosthesis (1).
